# EUROPEAN PATENT APPLICATION

(11) **EP 1 466 714 A1**
(43) Date of publication of application: **13.10.2004**
(21) Application number: 03017612.7
(22) Date of filing: 11.08.2003
(51) Int. Cl.: B28D 1/14, B23B 51/02, B23B 51/12

(54) **Drill tool for forming a channel in a wall**

(30) Priority: 09.04.2003 IT TO20030065
(71) Applicant: Arcotende Di Cesare Versio, 10023 Chieri (TO) (IT)
(72) Inventor: Versio, Cesare, I-10023 Chieri(TO) (IT)
(74) Representative: Robba, Pierpaolo

(57) **Abstract**

Drill tool for forming a channel in a masonry wall, said tool (1) comprising: a shank (3) for connecting said tool to the chuck of said drill; a bit (7) having a shape and made of a material suitable for making holes in said wall; at least one tubular element (5) hinged between said shank (3) and said bit (7) by means of corresponding removable universal joints such that the connection of the at least one tubular element (5) with a second tubular element (5) is possible in order to make the length of said tool (1) modifiable at will.

## Description

The present invention refers to a drill tool suitable to forming a channel in a wall.

More particularly, the present invention refers to a tool allowing to form a channel inside a masonry wall, said channel being fit for the passage of electric wires, tubes or the like.

It often occurs inside a house the need of installing on a wall a new light switch, a new telephone socket, some hydraulic connections or simply the need of moving said elements from one region to another region of the wall itself.

If a channel had not been already provided for inside the wall, it is inevitable to form a channel so as to let the wires or tubes pass inside it.

The realisation of a new channel for the passage of the wires or tubes entails a break of the wall external surface along all the length comprised between the point from which it is wished to shunt the wires or tubes and the point in which it is wished to realise the new hydraulic or electric connection.

A drawback of this type of installation is due to the fact that, once the phase of laying the wires or tubes has been carried out, it is necessary to reconstruct the wall external surface in correspondence with the longitudinal break, generally by giving a coat of lime and then by plastering the part affected by the break.

An installation of this type further provokes a lot of dirt which gives cause for a considerable annoyance inside a house.

It is therefore an object of the present invention to provide a tool suitable to forming in a wall a channel for the passage of electric wires, hydraulic tubes and the like without it being necessary to break the surface of the wall itself in correspondence with said channel.

A further object of the invention is that of providing a tool suitable to the above mentioned object, which is economic and of simple use.

This and other objects are obtained by means of the tool for forming a channel in a wall as claimed in the hereby attached claims.

The invention will be now described in detail with particular reference to the hereby attached figures provided as a non-limiting example wherein:
- Figure 1 is an overall view of the tool according to the invention;
- Figure 2 shows an applicative example of the tool according to the invention.

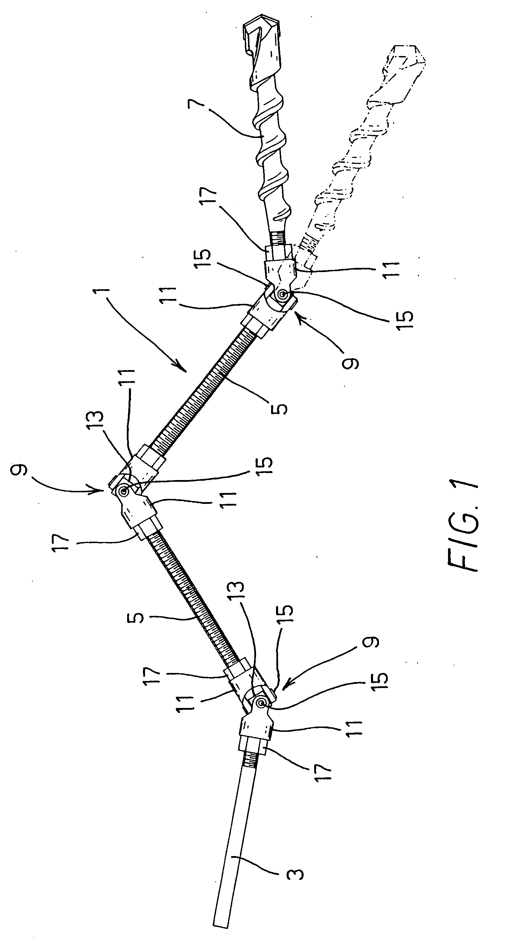

With reference to Figure 1, a tool 1 according to the invention comprises at one of its ends a shank 3 suitable to be engaged with a device, like for instance the chuck of a drill, said device being able to impart a rotary movement to said shank 3 and therefore to the tool 1.

At the opposite end of the tool 1 with respect to said shank 3 it is provided a twist bit 7 of the type suitable to making holes in a wall, said twist bit being hinged to one or more tubular elements 5 arranged in series and hinged between them between said shank 3 and said bit 7.

The connection between the shank 3, the tubular elements 5 and the bit 7 is realised by means of articulated joints 9.

Each joint 9 is preferably of the cross universal type and is obtained by means of a pair of forks 11 arranged rotated by 90° the one with respect to the other, between said forks being housed the cross 13 which is hinged to the forks 11 by means of corresponding pins 15.

Thanks to the universal joints 9, the consecutive elements 3, 5, 7 may assume different angulations the ones with the respect to the others while maintaining the possibility of rotating about their own axis, as shown in Figure 1.

Advantageously, said forks 11 are screwed to the ends of the tubular elements 5 which are in turn preferably obtained by means of threaded bar sections. In the same way the shank 3 and the bit 7 present a threaded end for the engagement with the corresponding fork 11. Hexagon nuts 17 are provided in correspondence with the forks 11 for blocking tightly, respectively, the shank 3, the tubular elements 5 and the bit 7 against said forks 11.

Thanks to this arrangement the length of the tool 1 according to the present invention may be varied at pleasure by increasing or decreasing the number of tubular elements 5.

Advantageously, the bit 7 will be chosen of appropriate material and shape according to the wall consistency.

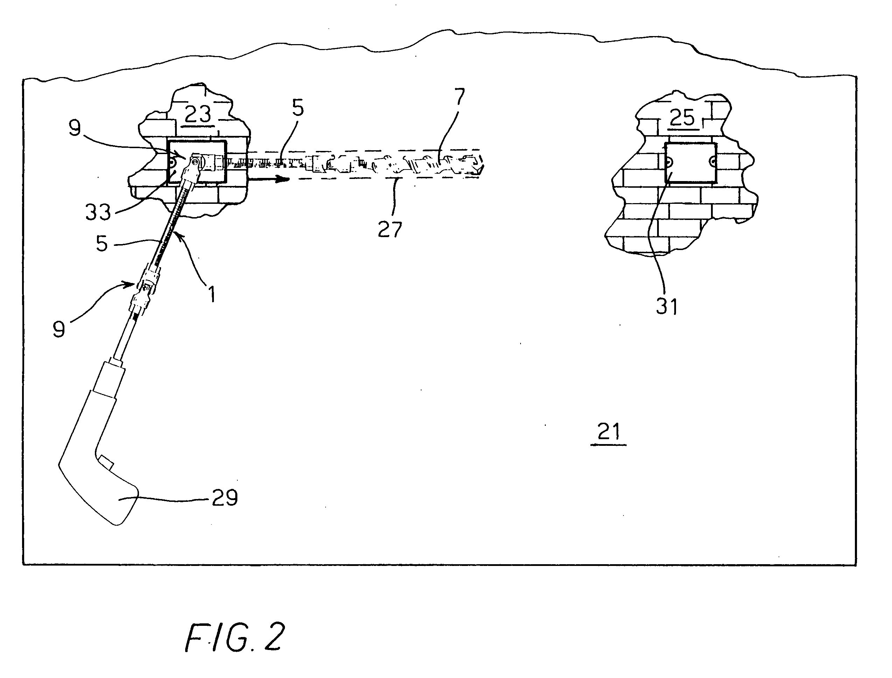

With reference to Figure 2, the working of the tool 1 according to the invention, for instance for shunting some (not shown) wires from a connector block 33 towards a connector block 31 of a new-installed light switch, occurs as follows:
a) a first opening 23 and a second opening 25 are made according to the known art in the wall 21 in correspondence with the terminal zones of the channel 27 that one wishes to realise inside the wall 21;
b) the tool 1 is inserted for instance in the opening 23 with the bit 7 in a direction substantially parallel to the wall 21 and towards the exit zone of the channel 27 that one wishes to realise, said exit zone corresponding with the second opening 25;
c) the device 29 is activated, preferably at reduced speed if said device 29 is a drill, said device imparting a rotary movement to the tool 1 so that the bit 7 of the tool 1 makes its way inside the wall 21 while forming said channel 27;
d) until the bit 7 does not appear at the opening 25 of the wall 21, a tubular element 5 is added to the tool 1 and the previous step is repeated.

It should be remarked that the tubular elements 5 can be added simply by acting on the joints 9 external to the wall, without it being necessary to pull out the bit 7 from the wall.

Besides, all the above mentioned operations can be advantageously realised by a single operator without damaging the wall zone comprised between the two openings 23 and 25.

## Claims

1. Drill tool for forming a channel in a wall (2 1 ), said tool (1) comprising:
- a shank (3) for connecting said tool to the chuck of said drill;
- a bit (7) having a shape and made of a material suitable for making holes in said wall (21);
- at least a tubular element (5) hinged between said shank (3) and said bit (7) by means of corresponding removable universal joints for allowing the connection between said at least one tubular element with a second tubular element in order to make the length of said tool (1) modifiable at pleasure.

2. Tool according to claim 1, wherein said universal joints are of the cross type and are obtained by means of a pair of forks (11) arranged rotated by 90° the one with respect to the other, between said forks being arranged a cross (13) hinged to the forks (11) by means of corresponding pins (15).

3. Tool according to claim 2, wherein said forks (11) are screwed onto the ends of said tubular elements (5).

4. Tool according to claim 3, wherein said tubular elements (5) are obtained by means of threaded bar sections.

5. Tool according to claim 4, wherein said shank (3) and said bit (7) present a threaded end for engagement with a corresponding fork (11).

6. Tool according to claim 5, wherein hexagon nuts (17) are provided in correspondence with said forks (11) for blocking tightly, respectively, said shank (3), said tubular elements (5) and said bit (7) against said forks (11).
